# EUROPÄISCHE PATENTSCHRIFT

(11) **EP 2 673 236 B1**
(45) Veröffentlichungstag und Bekanntmachung des Hinweises auf die Patenterteilung: **06.04.2016**
(21) Anmeldenummer: 12703776.0
(22) Anmeldetag: 07.02.2012
(51) Int. Cl.: C01B 25/42, A21D 2/02, A21D 8/04, C01B 25/30

(54) **MODIFIZIERTES DINATRIUMDIHYDROGENDIPHOSPHAT**
MODIFIED DISODIUM PYROPHOSPHATE
DIHYDROGÉNODIPHOSPHATE DE DISODIUM MODIFIÉ

(30) Priorität: 08.02.2011 DE 102011003816
(43) Veröffentlichungstag der Anmeldung: 18.12.2013
(73) Patentinhaber: Chemische Fabrik Budenheim KG, 55257 Budenheim (DE)
(72) Erfinder: BOUCHAIN, Wolfgang, 65207 Wiesbaden (DE)
(74) Vertreter: WSL Patentanwälte Partnerschaft mbB
(86) Internationale Anmeldenummer: PCT/EP2012/052034
(87) Internationale Veröffentlichungsnummer: WO 2012/107437

(56) Entgegenhaltungen:
- GB-A- 2 195 073
- US-A- 2 408 258
- US-A- 2 630 372
- US-A- 2 844 437

## Beschreibung

Die Erfindung betrifft verzögert reagierendes modifiziertes Dinatriumdihydrogendiphosphat (SAPP), dessen Herstellung und dessen Verwendung als Triebsäure für die Herstellung von Backwaren.

### Hintergrund der Erfindung

Bei der Herstellung von Backwaren werden den Massen bzw. Teigen Backtriebmittel zugesetzt, die während der Herstellung Gas freisetzen, in der Regel Kohlendioxid. Dieses Kohlendioxid lockert die Backwaren.

Hefen entwickeln bei der Gärung Kohlendioxid und werden daher zur Lockerung von Teigen als Backtriebmittel eingesetzt. Anfang des 19. Jahrhunderts wurden Zweikomponenten-Backtriebmittel als Ersatz für Hefe entwickelt. Zunächst wurde Natron (Natriumbicarbonat, Natriumhydrogencarbonat) dem Teig zugesetzt und darin gebundenes Kohlendioxid durch später zugegebene Salzsäure freigesetzt. Da sich Salzsäure nicht gut handhaben ließ, wurde später statt Salzsäure Weinstein (Kaliumhydrogentartrat) als Säureträger eingesetzt. Bereits in der Mitte des 19. Jahrhunderts waren Backpulver aus Natron, Weinstein und Stärke als Trennmittel erhältlich. Auf dieser Basis brachte Dr. August Oetker um 1900 sein erstmals industriell gefertigtes Backpulver "Backin" auf den Markt.

Ebenfalls in der Mitte des 19. Jahrhunderts wurde ein Backpulver entwickelt, das anstelle von Weinstein Monocalciumphosphat (Ca(H₂PO₄)₂ H₂O) enthielt und als "pulverulente Phosphorsäure" bezeichnet wurde. Später wurde Monocalciumphosphat wasserfrei eingesetzt.

Um eine verzögerte Kohlendioxidentwicklung im Teig bzw. in der Masse zu erreichen, überzog man die Pulverpartikel der Reaktionspartner mit schwer wasserlöslichen Schichten, z. B. Natron mit wachsartigem Fett oder das saure Phosphat mit schwer löslichem Calciumphosphat. Ein Durchbruch war die Einführung des sauren Natriumpyrophosphats (Dinatriumdihydrogendiphosphat, SAPP, Na₂H₂P₂O₇) in die Backpulverherstellung im Jahre 1901. Dieses Phosphat dient als Säureträger und führt zur Freisetzung des größten Teils des Kohlendioxids aus dem Kohlendioxidträger erst im Backofen, also bei Erhitzung des Teiges bzw. der Masse ("Nachtrieb"). Damit bestand die Möglichkeit, Teige und Massen nach einer Zwischenlagerung (zweckmäßig gekühlt oder gefroren) zu backen. Neben diesen Backpulvern, deren Wirkung auf der Reaktion von Säureträgern mit Kohlendioxidträgern beruht, gab es die Einkomponenten-Backpulver Hirschhornsalz und Pottasche.

Je nach Zeitpunkt der Freisetzung des Gases vor dem Backen bei der Teig- bzw. Massebereitung oder erst beim Erhitzen im Backofen spricht man von Vortrieb oder Nachtrieb (Ofentrieb). Mit dem Verhältnis zwischen Vor- und Nachtrieb eines Backtriebmittels kann bei den einzelnen Backwaren die Volumenausbildung und Porenstruktur der Gebäcke beeinflusst werden.

### Kohlendioxidträger

Als Kohlendioxidträger wird heute fast ausschließlich Natron (Natriumhydrogencarbonat, Natriumbicarbonat, NaHCO₃) verwendet. Möglich ist auch der Einsatz von Kaliumhydrogencarbonat, Natriumcarbonat, Pottasche (Kaliumcarbonat) und amorphem Calciumcarbonat.

Wird Natron, um eine schnelle Reaktion zu vermeiden, z.B. mit Hartfetten überzogen (gecoatet), müssen feine Körnungen (≤ 15µm) eingesetzt werden, und es muss darauf geachtet werden, dass sich keine Agglomerate bilden. Grobe gecoatete Körnchen und Agglomerate lösen sich in der Masse nicht vollständig auf und führen durch lokal begrenzte pH-Wert-Erhöhungen zu unerwünschten punktuellen Verfärbungen in der Krume.

### Säureträger

Hier gibt es eine große Zahl von Substanzen. Je nach erwünschtem Verhältnis zwischen Vortrieb (bei der Teig- bzw. Massebereitung) und Nachtrieb (im Backofen) werden sie einzeln für "einfache" Backpulver oder in Kombinationen mit unterschiedlichen Mengenverhältnissen für "doppelte" Backpulver eingesetzt. Beispiele verwendeter Säureträger sind wasserfreie Zitronensäure, Weinsäure, Weinstein, saures Natriumpyrophosphat (SAPP), Monocalciumphosphat-Monohydrat, wasserfreies Monocalciumphosphat, Natrium-Aluminiumphosphat, Glucono-delta-Lacton etc.

Auch Natriumhydrogencarbonat gibt ohne Säurezugabe beim Backen Kohlendioxid ab; allerdings weniger als in Kombination mit einem Säureträger. Außerdem weisen diese Gebäcke eine leicht seifige Geschmacksnote auf.

Die Bildung des gasförmigen Kohlendioxids aus einem Zweikomponenten-Backpulver mit einem Säureträger und Natriumhydrogencarbonat verläuft vereinfacht nach dem Schema

NaHCO₃ + Säure → CO₂ + Na-Salz der Säure + H₂O.

Nur in praktisch wasserfreien Backwaren liegen die Reaktionsprodukte als Salz vor, in anderen dissoziiert es weitgehend in Natriumkationen und Säureanionen. Je nach den gegebenen pH-Werten tragen die Anionen der mehrbasischen Säuren eine oder mehrere negative Ladungen. Die osmotischen Verhältnisse und die Art und Menge der vorhandenen Enzyme beeinflussen ebenfalls die Art der entstehenden Produkte. Diphosphationen können (z.B. unter Einfluss von Phosphatase) zu zwei Monophosphationen aufgespalten werden; Monophosphate können zu Oligophosphaten kondensieren. Auch bei Anwendung einer ausgefeilten Analytik lässt sich bei Phosphaten wegen der unausweichlichen Artefaktbildung nicht klären, welche Verbindungen tatsächlich in der Backware präsent sind.

### Die Teigreaktionsrate (ROR) des Säureträgers - Standardtest

Die Teigreaktionsrate, auch als ROR bezeichnet (Rate of Reaction), gibt an, in welchem Maße der Säureträger eine Gasentwicklung bereits in der Masse, also einen "Vortrieb", bewirkt. Die Bestimmung der ROR erfolgt in einem Standardteig. Hierfür werden Weizenmehl (Type 550; 171 g), Pflanzenfett (zum Teil gehärtet; 18 g) und Kochsalz (3 g) in einem temperierten Laborkneter vermischt, bis eine Temperatur von 27°C erreicht ist. Danach setzt man Natriumhydrogencarbonat (2,265 g) und den Säureträger hinzu und knetet erneut 3 min lang. Im Falle von saurem Natriumpyrophosphat (SAPP) werden 3,171 g dieses Säureträgers eingesetzt. Nachdem gesichert wurde, dass die Apparatur gasdicht verschlossen ist, füllt man auf 27°C vorgewärmtes destilliertes Wasser (120 g) und eine 1 %-ige Calciumchloridlösung (3,5 ml) in das Vorlagegefäß und lässt es zu der Vormischung im Kneter zulaufen. Der Hahn des Vorlagegefäßes wird sofort geschlossen, der Kneter eingeschaltet und mit der Zeitmessung begonnen. Die Knetzeit beträgt wiederum 3 min. Bei ausgeschaltetem Kneter wird für weitere 5 min die Gasentwicklung beobachtet. Das entwickelte Kohlendioxid wird in einer Gasbürette aufgefangen, und nach 8 Minuten wird das Volumen gemessen. Die Prozentzahl (von 100% Gesamtkohlendioxid im Natriumhydrogencarbonat) des unter diesen Bedingungen freigesetzten Kohlendioxids stellt die ROR des Säureträgers dar. Der hier beschriebene Standardtest liegt auch der Bestimmung der Teigreaktionsrate (ROR) gemäß der vorliegenden Erfindung zugrunde.

Die ROR von schnell reagierenden organischen Säuren wie Zitronensäure, Weinsäure und auch Weinstein liegt bei 60 bis 70. Verschiedene Typen des sauren Natriumpyrophosphats (SAPP) und z.B. auch Natriumaluminiumphosphat haben dagegen ROR-Werte von unter 20 bis 40. Eine Zwischenstellung nimmt das GDL (Glucono-Delta-Lacton) ein. Die Gasentwicklung setzt etwas verzögert ein, nach 8 Minuten sind etwa 30 % des vorhandenen Kohlendioxids freigesetzt (ROR = 30). Während bei anderen Säureträgern die Gasentwicklung in der ungebackenen Masse bzw. im ungebackenen Teig zu einem gewissen Stillstand kommt, schreitet hier die Gasentwicklung kontinuierlich fort, ähnlich wie bei der Hefegärung. Ursache hierfür ist die Kinetik der Lactonspaltung, die aus dem nicht sauer reagierenden Lacton die Gluconsäure bildet.

Saures Natriumpyrophosphat (SAPP) erhält man durch Umsetzung einer wässrigen Lösung von Natriumhydroxid oder Natriumcarbonat mit Phosphorsäure zu einer Mononatriumphosphatlösung und anschließende Entwässerung. Reines SAPP hat eine Teigreaktionsrate (ROR) gemäß der oben genannten standardisierten Meßmethode in der Größenordnung von etwa 40. Ein SAPP mit einer niedrigeren ROR bezeichnet man auch als ein verzögert wirkendes SAPP oder verzögertes SAPP. Je nach erzielter ROR bezeichnet man die Varianten von SAPP beispielsweise mit SAPP 40, SAPP 36, SAPP 28, SAPP 20, SAPP 15 und SAPP 10.

Zur Reduzierung der ROR, d. h. einer Herabsetzung des Vortriebs zu Gunsten eines höheren Nachtriebs ist es bekannt, SAPP durch den Zusatz von Metallionen zu modifizieren, insbesondere durch den Zusatz einer relativ hohen Menge an Aluminiumionen. Aufgrund der Bedenken gegen die Wirkungen von Aluminium auf die Gesundheit und daraus resultierender gesetzlicher Grenzwerte für die Aluminiumaufnahme durch die Nahrung bestehen jedoch generell Bestrebungen, den Aluminiumgehalt in Lebensmitteln erheblich zu reduzieren.

Zur Herstellung eines SAPP mit verzögerter Teigreaktionsrate schlägt die US-A-2 844 437 die auf das Endprodukt bezogenen Zugabemengen von 0,05 bis 0,30 Gew.-% Calciumoxid (CaO) und 0,05 bis 0,30 Gew.% Aluminiumoxid (Al₂O₃) zu der Phosphorsäure vor der Umsetzung mit Natriumhydroxid oder Natriumcarbonat und anschließendes Erhitzen der erhaltenen Mononatriumphosphatlösung auf eine Temperatur von 225 - 240 °C zur Überführung in SAPP vor. Die Teigreaktionsrate des erhaltenen SAPP soll nach 2 min 20 bis 25 % betragen, was bei dem üblicherweise auf eine Reaktionszeit von 8 min bezogenen Standardtest für die Bestimmung der Teigreaktionsrate einem SAPP mit einer ROR von etwa 28 entspricht. Besonders nachteilig ist hier der zur Herabsetzung der ROR gegenüber reinem SAPP erforderliche hohe Gehalt an Aluminium.

Die US-A-2 408 258 schlägt zur Herstellung eines SAPP mit verzögerter Teigreaktionsrate vor, einer Mononatriumorthophosphatlösung Pottasche (Kaliumcarbonat, K₂CO₃) und Aluminiumoxid (Al₂O₃), entsprechend einer Menge von 0,10 - 0,20 Gew.-% K₂O und 0,25 - 0,075 Gew.-% Al₂O₃ bezogen auf NaH₂PO₄ zuzusetzen, die Lösung innerhalb von weniger als 12 Sek. zu trocknen und das trockene Mononatriumorthophosphat in einer Wasserdampfatmosphäre bei einer Temperatur von 225 - 235 °C für einen Zeitraum von 4 bis 6 h in SAPP zu überführen. Die Teigreaktionsrate des frisch hergestellten SAPP soll etwa 28 % betragen und nach einer Lagerung des SAPP für sechs Monate noch 30 - 31 %. Nachteilig ist auch hier der zur Herabsetzung der ROR gegenüber reinem SAPP erforderliche hohe Gehalt an Aluminium.

Die US-A-4 804 553 schlägt zur Herstellung eines SAPP mit verzögerter Teigreaktionsrate vor, ein SAPP im Verhältnis 1:10 bis 1:1000 mit dem Oxid oder Hydroxid von Calcium oder Magnesium zu vermahlen und anschließend bei einer Temperatur von 200 - 250 °C für einen Zeitraum von 0,25 bis 2 h zu tempern. Durch das Verfahren soll eine Reduzierung der Teigreaktionsrate erreicht werden. Die Beschreibung der Beispiele gibt jedoch an, dass das als Ausgangsmaterial für die Herstellung des SAPP verwendete Mononatriumphosphat bereits 0,14 Gew.% Aluminium, 0,24 Gew.-% Calcium und 0,11 Gew.-% Kalium enthielt. Das Endprodukt enthält somit ebenfalls einen hohen Gehalt an Aluminium, welches bekanntermaßen einen wesentlichen Beitrag zur Herabsetzung der ROR gegenüber reinem SAPP leistet. Es ist davon auszugehen, dass das durch Vermahlen eingebrachte Oxid oder Hydroxid von Calcium oder Magnesium im Endprodukt ebenfalls zumindest in einem überwiegenden Anteil in der Form des Oxids oder Hydroxids vorliegt. Messungen an einem entsprechend hergestellten SAPP mit 5 Gew.% Magnesiumhydroxid, entsprechend einem Verhältnis von SAPP zu Magnesiumhydroxid von 1:20, haben dies bestätigt. Des weiteren haben Versuche gezeigt, dass eine signifikante Reduzierung der Teigreaktionsrate nur durch die Kombination aus dem Vermahlen des SAPP mit Magnesiumhydroxid und anschließendem Tempern, nicht jedoch durch die jeweiligen Einzelmaßnahmen alleine erzielt werden konnte.

Die Aufgabe der vorliegenden Erfindung bestand darin, ein modifiziertes Dinatriumdihydrogendiphosphat (SAPP) mit verzögerter Teigreaktionsrate (ROR) mit möglichst niedrigem Gehalt an Aluminium bereitzustellen.

### Beschreibung der Erfindung

Gelöst wird diese Aufgabe durch ein Verfahren zur Herstellung von modifiziertem Dinatriumdihydrogendiphosphat (SAPP), wobei man
a) wässrige Phosphorsäure bereitstellt, welche Verbindungen von Magnesium, Calcium und Kalium und optional Verbindungen von Aluminium gelöst in einer Menge enthält, die bezogen auf das Produkt Dinatriumdihydrogendiphosphat 500 bis 5000 ppm Magnesium, 500 bis 5000 ppm Calcium, 100 bis 5000 ppm Kalium und 0 bis 400 ppm Aluminium entspricht,
b) eine wässrige Lösung von Natriumhydroxid oder Natriumcarbonat unter Rühren hinzufügt und
c) die erhaltene Lösung bei einer Temperatur im Bereich von 190 bis 250 °C bis zu einem Orthophosphatgehalt, gemessen als P₂O₅, < 5,0 Gew.-% entwässert.

Dinatriumdihydrogendiphosphat (saures Natriumpyrophosphat, SAPP) mit verzögerter Teigreaktionsrate (ROR) bezeichnet im Sinne der vorliegenden Erfindung ein Dinatriumdihydrogendiphosphat, welches gegenüber dem reinen Dinatriumdihydrogendiphosphat eine verzögerte, d. h. niedrigere Teigreaktionsrate (ROR) im Standardtest aufweist. Wenn hierin von dem reinen Dinatriumdihydrogendiphosphat (SAPP) die Rede ist, so bezeichnet dies ein Produkt ohne stabilisierende Zusätze. Sowohl bei reinem Dinatriumdihydrogendiphosphat als auch Dinatriumdihydrogendiphosphat mit verzögerter Teigreaktionsrate (ROR) im Sinne der vorliegenden Erfindung sind jedoch herstellungsbedingte geringe Mengen an Verunreinigungen und/oder herstellungsbedingte geringe Anteile an Orthophosphat oder höheren Kondensationsprodukten nicht ausgeschlossen und sollen von der Definition umfasst sein.

Das erfindungsgemäße modifizierte Dinatriumdihydrogendiphosphat lässt sich vorteilhaft in großem Maßstab herstellen, indem man die Ansatzlösung in einen beheizten Drehrohrofen einsprüht und die Umsetzung und Entwässerung im Drehrohrofen durchführt. Bei der Entwässerung entweicht im Wesentlichen nur Wasserdampf aus dem Drehrohrofen. Bei dieser Herstellungsanordnung ist von einer im Wesentlichen vollständigen Umsetzung der Phosphorsäure mit dem Natriumhydroxid oder Natriumcarbonat auszugehen. Aufgrund der Zusammensetzung der Ansatzlösung und der Reaktionsbedingungen, insbesondere der angewendeten Temperatur, wird angenommen, dass die durch die Ansatzlösung eingebrachten Metallionen, die neben Natrium insbesondere Magnesium, Calcium, Aluminium und/oder Kalium umfassen, im Endprodukt in der Form reiner oder gemischter Phosphate vorliegen, wobei diese Annahme den Schutzumfang der vorliegenden Erfindung nicht beschränken soll.

Das "Produkt Dinatriumdihydrogendiphosphat", auf das sich hierin die Mengen an Magnesium, Calcium, Kalium und/oder Aluminium beziehen, bezeichnet das als Endprodukt des Herstellungsverfahrens erhaltene modifizierte Dinatriumdihydrogendiphosphat, wobei man von einer vollständigen Umsetzung der Ausgangsstoffe ausgeht.

Mengenangaben für Magnesium, Calcium, Kalium und Aluminium in "ppm" beziehen sich auf die jeweiligen Elemente bzw. deren Ionen und nicht auf die eingesetzten Ausgangsverbindungen.

In einer bevorzugten Ausführungsform des erfindungsgemäßen Verfahrens werden die Mengen der in der Phosphorsäure gelösten Verbindungen von Magnesium, Calcium, Kalium und/oder Aluminium so ausgewählt, dass das erhaltene modifizierte Dinatriumdihydrogendiphosphat (SAPP) eine Teigreaktionsrate (ROR) im Standardtest nach 8 min von 8 bis 30 % CO₂ aufweist. Ein wesentlicher Vorteil des erfindungsgemäß hergestellten SAPP ist der erheblich geringere Gehalt an Aluminium gegenüber einem SAPP mit verminderter Teigreaktionsrate (ROR) nach dem Stand der Technik.

In einer weiteren bevorzugten Ausführungsform des erfindungsgemäßen Verfahrens werden die Mengen der in der Phosphorsäure gelösten Verbindungen von Magnesium, Calcium, Kalium und/oder Aluminium so ausgewählt werden, dass das modifizierte Dinatriumdihydrogendiphosphat (SAPP) eine Teigreaktionsrate (ROR) im Standardtest nach 8 min von 8 bis 22 % CO₂, vorzugsweise von 10 bis 20 % CO₂ aufweist. Ein derart stark verzögert wirkendes SAPP hat besondere Vorteile insbesondere bei der Herstellung von Backwaren, die erst nach einer längeren Lagerung gebacken werden sollen, z. B. gekühlt oder gefroren gelagerte Teige, die erst spät nach der Teigherstellung gebacken werden. Zudem wirkt sich die späte Freisetzung des Kohlendioxids je nach Anwendung vorteilhaft auf die Volumenausbildung und Porenstruktur der Backwaren aus.

In einer alternativen Ausführungsform des erfindungsgemäßen Verfahrens werden die Mengen der in der Phosphorsäure gelösten Verbindungen von Magnesium, Calcium, Kalium und/oder Aluminium so ausgewählt, dass das modifizierte Dinatriumdihydrogendiphosphat (SAPP) eine Teigreaktionsrate (ROR) im Standardtest nach 8 min von 22 bis 30 % CO₂, vorzugsweise von 22 bis 26 % CO₂ aufweist. Für einige Anwendungen ist eine verzögerte Teigreaktionsrate (ROR) in dem vorgenannten Bereich ausreichend und vorteilhaft. Ein solches SAPP benötigt weniger Zusätze, welche die Teigreaktionsrate (ROR) herabsetzen, und ist daher auch kostengünstiger herzustellen als ein stärker verzögert wirkendes SAPP.

Erfindungsgemäß bevorzugt ist
a) die in der Phosphorsäure gelöste Verbindung von Magnesium unter Magnesiumoxid, Magnesiumhydroxid, Magnesiumcarbonat, Magnesiumphosphaten und Gemischen davon ausgewählt und/oder
b) die in der Phosphorsäure gelöste Verbindung von Calcium unter Calciumoxid, Calciumhydroxid, Calciumcarbonat, Calciumphosphaten und Gemischen davon ausgewählt und/oder
c) die in der Phosphorsäure gelöste Verbindung von Kalium unter Kaliumhydroxid, Kaliumcarbonat, Kaliumphosphaten und Gemischen davon ausgewählt und/oder
d) die in der Phosphorsäure gelöste Verbindung von Aluminium unter Aluminiumhydroxid, Aluminiumphosphaten, Aluminiumoxid und Gemischen davon ausgewählt. Die Verwendung der vorgenannten Verbindungen bei der Herstellung des erfindungsgemäßen modifizierten SAPP haben den Vorteil, dass sie sich in der als Ausgangsstoff eingesetzten Phosphorsäure gut lösen und keine unerwünschten Anionen in das Produkt einbringen.

Bei dem erfindungsgemäßen Verfahren sind die Verbindungen von Magnesium bevorzugt in der Phosphorsäure gelöst in einer Menge enthalten, die bezogen auf das Produkt Dinatriumdihydrogendiphosphat 500 bis 4000 ppm, vorzugsweise 1000 bis 3000 ppm Magnesium entspricht.

Die Verbindungen von Calcium sind bevorzugt in der Phosphorsäure gelöst in einer Menge enthalten, die bezogen auf das Produkt Dinatriumdihydrogendiphosphat 1000 bis 4000 ppm Calcium entspricht.

Die Verbindungen von Kalium sind bevorzugt in der Phosphorsäure gelöst in einer Menge enthalten, die bezogen auf das Produkt Dinatriumdihydrogendiphosphat 100 bis 4000 ppm, vorzugsweise 100 bis 3000 ppm, besonders bevorzugt 500 bis 2000 ppm Kalium entspricht.

Die Verbindungen von Aluminium sind bevorzugt in der Phosphorsäure gelöst in einer Menge enthalten, die bezogen auf das Produkt Dinatriumdihydrogendiphosphat 0 bis 300 ppm, vorzugsweise 0 bis 200 ppm, besonders bevorzugt 0 bis 100 ppm Aluminium, ganz besonders bevorzugt 0 bis 50 ppm Aluminium entspricht. Auch wenn Aluminium in dem erfindungsgemäßen Verfahren als Zusatz zur Steuerung der Teigreaktionsrate (ROR) in geringen Mengen eingesetzt werden kann, ist es bevorzugt, kein Aluminium zuzusetzen. Aluminium kann jedoch auch dann, wenn es nicht extra zugesetzt wird, als Verunreinigung in geringen Mengen enthalten sein.

In einer bevorzugten Ausführungsform sind die Verbindungen von Magnesium, Calcium, Kalium, und/oder Aluminium in der Phosphorsäure gelöst in einer Menge enthalten, die bezogen auf das Produkt Dinatriumdihydrogendiphosphat einer Gesamtmenge an Magnesium plus Calcium plus Kalium plus Aluminium von wenigstens 2000 ppm entspricht.

In einer weiteren bevorzugten Ausführungsform des erfindungsgemäßen Verfahrens fügt man die wässrige Lösung von Natriumhydroxid oder Natriumcarbonat der Phosphorsäure in einer Menge bis zu einer Basizität, bezogen auf das molare Verhältnis Alkali zu Phosphor (Alk/P), von 0,900 bis 1,100, vorzugsweise von 0,990 bis 1,040, hinzu. Die Basizität wird durch alkalimetrische Rücktitration der Ansatzlösung vor der Entwässerung bestimmt.

In einer weiteren bevorzugten Ausführungsform des erfindungsgemäßen Verfahrens führt man die Entwässerung der erhaltenen Lösung bis zu einem Orthophosphatgehalt < 3,0 Gew.-%, vorzugsweise < 2,0 Gew.-%, angegeben als P₂O₅, durch.

Die Erfindung umfasst auch ein modifiziertes Dinatriumdihydrogendiphosphat (SAPP), welches
i) 500 bis 5000 ppm Magnesium, 500 bis 5000 ppm Calcium, 100 bis 5000 ppm Kalium und 0 bis 400 ppm Aluminium enthält,
ii) einen Orthophosphatgehalt, gemessen als P₂O₅, in einer Menge < 5,0 Gew.-%, vorzugsweise < 3,0 Gew.-%, besonders bevorzugt < 2,0 Gew.-%, aufweist und
iii) eine Teigreaktionsrate (ROR) im Standardtest nach 8 min von 8 bis 30 % CO₂ aufweist.

Wie oben ausgeführt weist das erfindungsgemäße modifizierte Dinatriumdihydrogendiphosphat (SAPP)
a) eine Teigreaktionsrate (ROR) im Standardtest nach 8 min von 8 bis 22 % CO₂, vorzugsweise von 10 bis 20 % CO₂ oder
b) eine Teigreaktionsrate (ROR) im Standardtest nach 8 min von 22 bis 30 % CO₂, vorzugsweise von 22 bis 26 % CO₂ auf.

Erfindungsgemäß bevorzugt enthält das erfindungsgemäße modifizierte Dinatriumdihydrogendiphosphat (SAPP)
i) 500 bis 4000 ppm, vorzugsweise 1000 bis 3000 ppm Magnesium und/oder
ii) 1000 bis 4000 ppm Calcium und/oder
iii) 100 bis 4000 ppm, vorzugsweise 100 bis 3000 ppm, besonders bevorzugt 500 bis 2000 ppm Kalium und/oder
iv) 0 bis 300 ppm, vorzugsweise 0 bis 200 ppm, besonders bevorzugt 0 bis 100 ppm Aluminium, ganz besonders bevorzugt 0 bis 50 ppm Aluminium.

Die Gesamtmenge an Magnesium plus Calcium plus Kalium plus Aluminium beträgt in einer bevorzugten Ausführungsform wenigstens 2000 ppm.

Erfindungsgemäß weiterhin bevorzugt weist das erfindungsgemäße modifizierte Dinatriumdihydrogendiphosphat (SAPP) einen Orthophosphatgehalt < 3,0 Gew.-%, vorzugsweise < 2,0 Gew.-%, angegeben als P₂O₅, auf.

Die Erfindung umfasst auch ein nach dem hierin beschriebenen Verfahren hergestelltes oder herstellbares modifiziertes Dinatriumdihydrogendiphosphat (SAPP).

Weiterhin umfasst die Erfindung die Verwendung des hierin beschriebenen modifizierten Dinatriumdihydrogendiphosphats (SAPP) als Triebsäure für die Herstellung von Backwaren.

### Beispiele

In einem 1 L Dreihalskolben werden 235,5 g Phosphorsäure (75 %) vorgelegt und unter Rühren die in Tabelle 1 angegebenen Mengen an Calcium-, Magnesium-, Aluminium- und/oder Kaliumverbindungen zugegeben. Nach einer Rührzeit von ca. 30 min. bei 90°C werden nach dem Abkühlen auf Raumtemperatur 143,4 g NaOH-Lauge (50 %) zugetropft. Die entstandene Mononatriumphosphatlösung wird anschließend in einer Porzellanschale über Nacht in einem Trockenschrank bei 210 °C getrocknet und zu Dinatriumdihydrogendiphosphat überführt. Die Proben werden mit einer Labormühle vermahlen und abgesiebt (75 µm). Die erhaltenen SAPP-Produkte wurden analysiert und die Teigreaktionsrate (ROR) im Standardtest bestimmt. Die Ergebnisse sind in Tabelle 2 wiedergegeben. Bei den Versuchen a) bis e) und g) bis h) handelt es sich um Vergleichsversuche.

**Tabelle 1: In den Versuchen a) bis i) zu der Phosphorsäure zugegebene Mengen an Calcium-, Magnesium-, Aluminium- und/oder Kaliumverbindungen**

| Versuch | |
|---|---|
| a) | 1,00 g Ca(OH)₂ |
| b) | 0,96 g Mg(OH)₂ |
| c) | 1,15 g Al(OH)₃ |
| d) | 0,96 g Mg(OH)₂ + 1,15 g Al(OH)₃ |
| e) | 1,00 g Ca(OH)2 + 0,96 g Mg(OH)₂ |
| f) | 1,00 g Ca(OH)2 + 0,96 Mg(OH)₂ + 1,15 g KH₂PO₄ |
| g) | 1,15 g Ca(OH)2 + 0,96 g Mg(OH)₂ + 0,05 g Al(OH)₃ |
| h) | 1,00 g Ca(OH)2 + 0,96 g Mg(OH)₂ + 0,10 g Al(OH)₃ |
| i) Vergleich | --- |

**Tabelle 2: Ergebnisse der Gehaltsbestimmungen und der für das jeweilige SAPP-Produkt im Standardtest bestimmten ROR.**

| Versuch | P₂O₅ (%) | Na₂O (%) | Mg (ppm) | Ca (ppm) | K (ppm) | Al (ppm) | ROR (% CO₂; 8 min.) |
|---|---|---|---|---|---|---|---|
| a) | 65,1 | 27,6 | < 50 | 3450 | < 100 | < 10 | 15,9 |
| b) | 63,8 | 28,0 | 2900 | < 10 | < 100 | < 10 | 24,6 |
| c) | 64,0 | 27,0 | < 50 | < 10 | < 100 | 2200 | 22,3 |
| d) | 64,5 | 28,0 | 2850 | < 10 | < 100 | 2150 | 18,6 |
| e) | 63,7 | 29,1 | 2900 | 3900 | < 100 | < 10 | 21,3 |
| f) | 64,4 | 28,4 | 2900 | 3500 | 1800 | < 10 | 12,5 |
| g) | 64,1 | 28,7 | 2900 | 3850 | < 100 | 100 | 15,1 |
| h) | 64,0 | 28,5 | 2850 | 3400 | < 100 | 190 | 12,8 |
| i) Vgl. | 63,4 | 27,6 | < 50 | <10 | < 100 | < 10 | 41,8 |

## Patentansprüche

1. Verfahren zur Herstellung von modifiziertem Dinatriumdihydrogendiphosphat (SAPP), wobei man
a) wässrige Phosphorsäure bereitstellt, welche Verbindungen von Magnesium, Calcium und Kalium und optional Verbindungen von Aluminium gelöst in einer Menge enthält, die bezogen auf das Produkt Dinatriumdihydrogendiphosphat 500 bis 5000 ppm Magnesium, 500 bis 5000 ppm Calcium, 100 bis 5000 ppm Kalium und 0 bis 400 ppm Aluminium entspricht,
b) eine wässrige Lösung von Natriumhydroxid oder Natriumcarbonat unter Rühren hinzufügt und
c) die erhaltene Lösung bei einer Temperatur im Bereich von 190 bis 250 °C bis zu einem Orthophosphatgehalt, gemessen als P₂O₅, < 5,0 Gew.-% entwässert.

2. Verfahren nach Anspruch 1, **dadurch gekennzeichnet, dass** die Mengen der in der Phosphorsäure gelösten Verbindungen von Magnesium, Calcium und Kalium und optional von Aluminium so ausgewählt werden, dass das modifizierte Dinatriumdihydrogendiphosphat (SAPP) eine Teigreaktionsrate (ROR) im Standardtest nach 8 min von 8 bis 30 % CO₂ aufweist.

3. Verfahren nach Anspruch 2, **dadurch gekennzeichnet, dass** die Mengen der in der Phosphorsäure gelösten Verbindungen von Magnesium, Calcium und Kalium und optional von Aluminium so ausgewählt werden, dass das modifizierte Dinatriumdihydrogendiphosphat (SAPP)
a) eine Teigreaktionsrate (ROR) im Standardtest nach 8 min von 8 bis 22 % CO₂, vorzugsweise von 10 bis 20 % CO₂ oder
b) eine Teigreaktionsrate (ROR) im Standardtest nach 8 min von 22 bis 30 % CO₂, vorzugsweise von 22 bis 26 % CO₂ aufweist.

4. Verfahren nach einem der vorangegangenen Ansprüche, **dadurch gekennzeichnet, dass**
a) die in der Phosphorsäure gelöste Verbindung von Magnesium unter Magnesiumoxid, Magnesiumhydroxid, Magnesiumcarbonat, Magnesiumphosphaten und Gemischen davon ausgewählt ist und/oder
b) die in der Phosphorsäure gelöste Verbindung von Calcium unter Calciumoxid, Calciumhydroxid, Calciumcarbonat, Calciumphosphaten und Gemischen davon ausgewählt ist und/oder
c) die in der Phosphorsäure gelöste Verbindung von Kalium unter Kaliumhydroxid, Kaliumcarbonat, Kaliumphosphaten und Gemischen davon ausgewählt und/oder
d) die in der Phosphorsäure gelöste Verbindung von Aluminium unter Aluminiumhydroxid, Aluminiumphosphaten, Aluminiumoxid und Gemischen davon ausgewählt ist.

5. Verfahren nach einem der vorangegangenen Ansprüche, **dadurch gekennzeichnet, dass** die Verbindungen von Magnesium in der Phosphorsäure gelöst in einer Menge enthalten sind, die bezogen auf das Produkt Dinatriumdihydrogendiphosphat 500 bis 4000 ppm, vorzugsweise 1000 bis 3000 ppm Magnesium entspricht.

6. Verfahren nach einem der vorangegangenen Ansprüche, **dadurch gekennzeichnet, dass** die Verbindungen von Calcium in der Phosphorsäure gelöst in einer Menge enthalten sind, die bezogen auf das Produkt Dinatriumdihydrogendiphosphat 1000 bis 4000 ppm Calcium entspricht.

7. Verfahren nach einem der vorangegangenen Ansprüche, **dadurch gekennzeichnet, dass** die Verbindungen von Kalium in der Phosphorsäure gelöst in einer Menge enthalten sind, die bezogen auf das Produkt Dinatriumdihydrogendiphosphat 100 bis 4000 ppm, vorzugsweise 100 bis 3000 ppm, besonders bevorzugt 500 bis 2000 ppm Kalium entspricht.

8. Verfahren nach einem der vorangegangenen Ansprüche, **dadurch gekennzeichnet, dass** die Verbindungen von Aluminium in der Phosphorsäure gelöst in einer Menge enthalten sind, die bezogen auf das Produkt Dinatriumdihydrogendiphosphat 0 bis 300 ppm, vorzugsweise 0 bis 200 ppm, besonders bevorzugt 0 bis 100 ppm Aluminium, ganz besonders bevorzugt 0 bis 50 ppm Aluminium entspricht.

9. Verfahren nach einem der vorangegangenen Ansprüche, **dadurch gekennzeichnet, dass** die Verbindungen von Magnesium, Calcium und Kalium und optional von Aluminium in der Phosphorsäure gelöst in einer Menge enthalten sind, die bezogen auf das Produkt Dinatriumdihydrogendiphosphat einer Gesamtmenge an Magnesium plus Calcium plus Kalium plus Aluminium von wenigstens 2000 ppm entspricht.

10. Verfahren nach einem der vorangegangenen Ansprüche, **dadurch gekennzeichnet, dass** man die wässrige Lösung von Natriumhydroxid oder Natriumcarbonat der Phosphorsäure in einer Menge bis zu einer Basizität, bezogen auf das molare Verhältnis Alkali zu Phosphor (Alk/P), von 0,900 bis 1,100, vorzugsweise von 0,990 bis 1,040, hinzufügt.

11. Verfahren nach einem der vorangegangenen Ansprüche, **dadurch gekennzeichnet, dass** man die Entwässerung der erhaltenen Lösung bis zu einem Orthophosphatgehalt < 3,0 Gew.-%, vorzugsweise < 2,0 Gew.-%, angegeben als P₂O₅, durchführt.

12. Modifiziertes Dinatriumdihydrogendiphosphat (SAPP), **dadurch gekennzeichnet, dass** es
i) 500 bis 5000 ppm Magnesium, 500 bis 5000 ppm Calcium, 100 bis 5000 ppm Kalium und 0 bis 400 ppm Aluminium enthält,
ii) einen Orthophosphatgehalt, gemessen als P₂O₅, in einer Menge < 5,0 Gew.-%, vorzugsweise < 3,0 Gew.-%, besonders bevorzugt < 2,0 Gew.-%, aufweist und
iii) eine Teigreaktionsrate (ROR) im Standardtest nach 8 min von 8 bis 30 % CO₂ aufweist.

13. Modifiziertes Dinatriumdihydrogendiphosphat (SAPP) nach Anspruch 12, **dadurch gekennzeichnet, dass** es
a) eine Teigreaktionsrate (ROR) im Standardtest nach 8 min von 8 bis 22 % CO₂ vorzugsweise von 10 bis 20 % CO₂ oder
b) eine Teigreaktionsrate (ROR) im Standardtest nach 8 min von 22 bis 30 % CO₂, vorzugsweise von 22 bis 26 % CO₂ aufweist.

14. Modifiziertes Dinatriumdihydrogendiphosphat (SAPP) nach einem der Ansprüche 12 bis 13, **dadurch gekennzeichnet, dass** es
i) 500 bis 4000 ppm, vorzugsweise 1000 bis 3000 ppm Magnesium und/oder
ii) 1000 bis 4000 ppm Calcium und/oder
iii) 100 bis 4000 ppm, vorzugsweise 100 bis 3000 ppm, besonders bevorzugt 500 bis 2000 ppm Kalium und/oder
iv) 0 bis 300 ppm, vorzugsweise 0 bis 200 ppm, besonders bevorzugt 0 bis 100 ppm Aluminium, ganz besonders bevorzugt 0 bis 50 ppm Aluminium
enthält,
wobei die Gesamtmenge an Magnesium plus Calcium plus Kalium plus Aluminium vorzugsweise wenigstens 2000 ppm beträgt.

15. Modifiziertes Dinatriumdihydrogendiphosphat (SAPP) nach einem der Ansprüche 12 bis 14, **dadurch gekennzeichnet, dass** es einen Orthophosphatgehalt < 3,0 Gew.-%, vorzugsweise < 2,0 Gew.-%, angegeben als P₂O₅, aufweist.

16. Modifiziertes Dinatriumdihydrogendiphosphat (SAPP), hergestellt oder herstellbar nach einem der Ansprüche 1 bis 11.

17. Verwendung eines modifizierten Dinatriumdihydrogendiphosphat (SAPP), nach einem der Ansprüche 12 bis 16 als Triebsäure für die Herstellung von Backwaren.

## Claims

1. Process for the preparation of modified disodium dihydrogen diphosphate (SAPP), wherein
a) aqueous phosphoric acid which comprises compounds of magnesium, calcium and potassium and optionally compounds of aluminium dissolved in an amount which, based on the product disodium dihydrogen diphosphate, corresponds to 500 to 5,000 ppm of magnesium, 500 to 5,000 ppm of calcium, 100 to 5,000 ppm of potassium and 0 to 400 ppm of aluminium is provided,
b) an aqueous solution of sodium hydroxide or sodium carbonate is added, while stirring, and
c) the solution obtained is dewatered at a temperature in the range of from 190 to 250 °C to an orthophosphate content, measured as P₂O₅, of < 5.0 wt.%.

2. Process according to claim 1, **characterized in that** the amounts of the compounds of magnesium, calcium and potassium and optionally aluminium dissolved in the phosphoric acid are chosen such that the modified disodium dihydrogen diphosphate (SAPP) has a dough rate of reaction (ROR) in the standard test after 8 min of from 8 to 30 % of CO₂.

3. Process according to claim 2, **characterized in that** the amounts of the compounds of magnesium, calcium and potassium and optionally aluminium dissolved in the phosphoric acid are chosen such that the modified disodium dihydrogen diphosphate (SAPP) has
a) a dough rate of reaction (ROR) in the standard test after 8 min of from 8 to 22 % of CO₂, preferably from 10 to 20 % of CO₂ or
b) a dough rate of reaction (ROR) in the standard test after 8 min of from 22 to 30 % of CO₂, preferably from 22 to 26 % of CO₂.

4. Process according to one of the preceding claims, **characterized in that**
a) the compound of magnesium dissolved in the phosphoric acid is selected from magnesium oxide, magnesium hydroxide, magnesium carbonate, magnesium phosphates and mixtures thereof and/or
b) the compound of calcium dissolved in the phosphoric acid is selected from calcium oxide, calcium hydroxide, calcium carbonate, calcium phosphates and mixtures thereof and/or
c) the compound of potassium dissolved in the phosphoric acid is selected from potassium hydroxide, potassium carbonate, potassium phosphates and mixtures thereof and/or
d) the compound of aluminium dissolved in the phosphoric acid is selected from aluminium hydroxide, aluminium phosphates, aluminium oxide and mixtures thereof.

5. Process according to one of the preceding claims, **characterized in that** the phosphoric acid comprises the compounds of magnesium dissolved in an amount which, based on the product disodium dihydrogen diphosphate, corresponding to 500 to 4,000 ppm, preferably 1,000 to 3,000 ppm of magnesium.

6. Process according to one of the preceding claims, **characterized in that** the phosphoric acid comprises the compounds of calcium dissolved in an amount which, based on the product disodium dihydrogen diphosphate, corresponding to 1,000 to 4,000 ppm of calcium.

7. Process according to one of the preceding claims, **characterized in that** the phosphoric acid comprises the compounds of potassium dissolved in an amount which, based on the product disodium dihydrogen diphosphate, corresponding to 100 to 4,000 ppm, preferably 100 to 3,000 ppm, particularly preferably 500 to 2,000 ppm of potassium.

8. Process according to one of the preceding claims, **characterized in that** the phosphoric acid comprises the compounds of aluminium dissolved in an amount which, based on the product disodium dihydrogen diphosphate, corresponding to 0 to 300 ppm, preferably 0 to 200 ppm, particularly preferably 0 to 100 ppm of aluminium, very particularly preferably 0 to 50 ppm of aluminium.

9. Process according to one of the preceding claims, **characterized in that** the phosphoric acid comprises the compounds of magnesium, calcium, potassium and optionally of aluminium dissolved in an amount which, based on the product disodium dihydrogen diphosphate, corresponding to a total amount of magnesium plus calcium plus potassium plus aluminium of at least 2,000 ppm.

10. Process according to one of the preceding claims, **characterized in that** the aqueous solution of sodium hydroxide or sodium carbonate is added to the phosphoric acid in an amount up to a basicity, based on the molar ratio of alkali to phosphorus (Alk/P), of from 0.900 to 1.100, preferably from 0.990 to 1.040.

11. Process according to one of the preceding claims, **characterized in that** the dewatering of the solution obtained is carried out to an orthophosphate content of < 3.0 wt.%, preferably < 2.0 wt.%, indicated as P₂O₅.

12. Modified disodium dihydrogen diphosphate (SAPP), **characterized in that** it
i) comprises 500 to 5,000 ppm of magnesium, 500 to 5,000 ppm of calcium, 100 to 5,000 ppm of potassium and 0 to 400 ppm of aluminium,
ii) has an orthophosphate content, measured as P₂O₅, in an amount of < 5.0 wt.%, preferably < 3.0 wt.%, particularly preferably < 2.0 wt.%, and
iii) has a dough rate of reaction (ROR) in the standard test after 8 min of from 8 to 30 % of CO₂.

13. Modified disodium dihydrogen diphosphate (SAPP) according to claim 12, **characterized in that** it has
a) a dough rate of reaction (ROR) in the standard test after 8 min of from 8 to 22 % of CO₂, preferably from 10 to 20 % of CO₂ or
b) a dough rate of reaction (ROR) in the standard test after 8 min of from 22 to 30 % of CO₂, preferably from 22 to 26 % of CO₂.

14. Modified disodium dihydrogen diphosphate (SAPP) according to one of claims 12 to 13, **characterized in that** it comprises
i) 500 to 4,000 ppm, preferably 1,000 to 3,000 ppm of magnesium and/or
ii) 1,000 to 4,000 ppm of calcium and/or
iii) 100 to 4,000 ppm, preferably 100 to 3,000 ppm, particularly preferably 500 to 2,000 ppm of potassium and/or
iv) 0 to 300 ppm, preferably 0 to 200 ppm, particularly preferably 0 to 100 ppm of aluminium, very particularly preferably 0 to 50 ppm of aluminium,
the total amount of magnesium plus calcium plus potassium plus aluminium preferably being at least 2,000 ppm.

15. Modified disodium dihydrogen diphosphate (SAPP) according to one of claims 12 to 14, **characterized in that** it has an orthophosphate content of < 3.0 wt.%, preferably < 2.0 wt.%, indicated as P₂O₅.

16. Modified disodium dihydrogen diphosphate (SAPP) produced or producable according to one of claims 1 to 11.

17. Use of a modified disodium dihydrogen diphosphate (SAPP) according to one of claims 12 to 16 as a leavening acid for the production of baked goods.

## Revendications

1. Procédé de préparation de dihydrogénodiphosphate disodique (SAPP) modifié, dans lequel
a) on met à disposition un acide phosphorique en solution aqueuse, qui contient des composés du magnésium, du calcium et du potassium, et optionnellement de l'aluminium, dissous en une quantité qui correspond, par rapport au produit dihydrogénodiphosphate disodique à 500 à 5000 ppm de magnésium, 500 à 5000 ppm de calcium, 100 à 5000 ppm de potassium et 0 à 400 ppm d'aluminium,
b) on ajoute sous agitation une solution aqueuse d'hydroxyde de sodium ou de carbonate de sodium, et
c) on déshydrate la solution obtenue, à une température comprise dans la plage de 190 à 250°C, jusqu'à une teneur en orthophosphate, mesurée en P₂O₅, < 5,0 % en poids.

2. Procédé selon la revendication 1, **caractérisé en ce que** les quantités dissoutes dans l'acide phosphorique des composés du magnésium, du calcium et du potassium, et en option de l'aluminium, sont choisies de telle sorte que le dihydrogénodiphosphate disodique (SAPP) modifié présente une vitesse de réaction de la pâte (ROR), dans l'essai normalisé, de 8 à 30 % de CO₂ après 8 min.

3. Procédé selon la revendication 2, **caractérisé en ce que** les quantités dissoutes dans l'acide phosphorique des composés du magnésium, du calcium et du potassium, et en option de l'aluminium, sont choisies de telle sorte que le dihydrogénodiphosphate disodique (SAPP) modifié présente
a) une vitesse de réaction de la pâte (ROR), dans l'essai normalisé, de 8 à 22 % de CO₂, de préférence de 10 à 20 % de CO₂ après 8 min, ou
b) une vitesse de réaction de la pâte (ROR) dans l'essai normalisé de 22 à 30 % de CO₂, de préférence de 22 à 26 % de CO₂ après 8 min.

4. Procédé selon l'une des revendications précédentes, **caractérisé en ce que**
a) le composé du magnésium dissous dans l'acide phosphorique est choisi parmi l'oxyde de magnésium, l'hydroxyde de magnésium, le carbonate de magnésium, les phosphates de magnésium et les mélanges de ceux-ci, et/ou
b) le composé du calcium dissous dans l'acide phosphorique est choisi parmi l'oxyde de calcium, l'hydroxyde de calcium, le carbonate de calcium, les phosphates de calcium et les mélanges de ceux-ci, et/ou
c) le composé du potassium dissous dans l'acide phosphorique est choisi parmi l'hydroxyde de potassium, le carbonate de potassium, les phosphates de potassium et les mélanges de ceux-ci, et/ou
d) le composé de l'aluminium dissous dans l'acide phosphorique est choisi parmi l'hydroxyde d'aluminium, les phosphates d'aluminium, l'oxyde d'aluminium et les mélanges de ceux-ci.

5. Procédé selon l'une des revendications précédentes, **caractérisé en ce que** les composés du magnésium sont contenus dans l'acide phosphorique sous forme dissoute en une quantité qui, par rapport au produit dihydrogénodiphosphate disodique, correspond à 500 à 4000 ppm, de préférence 1000 à 3000 ppm de magnésium.

6. Procédé selon l'une des revendications précédentes, **caractérisé en ce que** les composés du calcium sont contenus dans l'acide phosphorique sous forme dissoute en une quantité qui, par rapport au produit dihydrogénodiphosphate disodique, correspond à 1000 à 4000 ppm de calcium.

7. Procédé selon l'une des revendications précédentes, **caractérisé en ce que** les composés du potassium sont contenus dans l'acide phosphorique sous forme dissoute en une quantité qui, par rapport au produit dihydrogénodiphosphate disodique, correspond à 100 à 4000 ppm, de préférence 100 à 3000 ppm, d'une manière particulièrement préférée 500 à 2000 ppm.

8. Procédé selon l'une des revendications précédentes, **caractérisé en ce que** les composés de l'aluminium sont contenus dans l'acide phosphorique sous forme dissoute en une quantité qui, par rapport au produit dihydrogénodiphosphate disodique, correspond à 0 à 300 ppm, de préférence 0 à 200 ppm, d'une manière particulièrement préférée 0 à 100 ppm d'aluminium, d'une manière tout particulièrement préférée à 0 à 50 ppm d'aluminium.

9. Procédé selon l'une des revendications précédentes, **caractérisé en ce que** les composés du magnésium, du calcium et du potassium et en option de l'aluminium sont contenus dans l'acide phosphorique sous forme dissoute en une quantité qui, par rapport au produit dihydrogénodiphosphate disodique, correspond à une quantité totale de magnésium plus calcium plus potassium plus aluminium d'au moins 2000 ppm.

10. Procédé selon l'une des revendications précédentes, **caractérisé en ce qu'**on ajoute la solution aqueuse d'hydroxyde de sodium ou de carbonate de sodium à l'acide phosphorique en une quantité allant jusqu'à une alcalinité qui, rapportée au rapport en moles de la base au phosphore (Alk/P), est de 0,900 à 1,100, de préférence de 0,990 à 1,040.

11. Procédé selon l'une des revendications précédentes, **caractérisé en ce qu'**on procède à la déshydratation de la solution obtenue, jusqu'à une teneur en orthophosphate < 3,0 % en poids, de préférence < 2,0 % en poids, exprimée en P₂O₅.

12. Dihydrogénodiphosphate disodique (SAPP) modifié, **caractérisé en ce que**
i) il contient 500 à 5000 ppm de magnésium, 500 à 5000 ppm de calcium, 100 à 5000 ppm de potassium et 0 à 400 ppm d'aluminium,
ii) il présente une teneur en orthophosphate, mesurée en P₂O₅, correspond à une quantité < 5,0 % en poids, de préférence < 3,0 % en poids, d'une manière particulièrement préférée < 2,0 % en poids, et
iii) il présente une vitesse de réaction de la pâte (ROR), dans l'essai normalisé, de 8 à 30 % en poids de CO₂ après 8 min.

13. Dihydrogénodiphosphate disodique (SAPP) modifié selon la revendication 12, **caractérisé en ce qu'**il présente
a) une vitesse de réaction de la pâte (ROR) dans l'essai normalisé, de 8 à 22 % de CO₂, de préférence de 10 à 20 % de CO₂ après 8 min, ou
b) une vitesse de réaction de la pâte (ROR) dans l'essai normalisé, de 22 à 30 % de CO₂, de préférence de 22 à 26 % de CO₂ après 8 min.

14. Dihydrogénodiphosphate disodique (SAPP) modifié selon l'une des revendications 12 à 13, **caractérisé en ce qu'**il contient
i) 500 à 4000 ppm, de préférence 1000 à 3000 ppm de magnésium, et/ou
ii) 1000 à 4000 ppm de calcium, et/ou
iii) 100 à 4000 ppm, de préférence 100 à 3000 ppm, d'une manière particulièrement préférée 500 à 2000 ppm de potassium, et/ou
iv) 0 à 300 ppm, de préférence 0 à 200 ppm, d'une manière particulièrement préférée 0 à 100 ppm d'aluminium, d'une manière tout particulièrement préférée de 0 à 50 ppm d'aluminium,
la quantité totale de magnésium plus calcium plus potassium plus aluminium étant de préférence d'au moins 2000 ppm.

15. Dihydrogénodiphosphate disodique (SAPP) modifié selon l'une des revendications 12 à 14, **caractérisé en ce qu'**il présente une teneur en orthophosphate < 3,0 % en poids, de préférence < 2,0 % en poids, exprimée en P₂O₅.

16. Dihydrogénodiphosphate disodique (SAPP) modifié, préparé ou pouvant être préparé selon l'une des revendications 1 à 11.

17. Utilisation d'un dihydrogénodiphosphate disodique (SAPP) modifié selon l'une des revendications 12 à 16 en tant qu'acide levant pour la fabrication de produits de boulangerie.
